**Europäisches Patentamt**

**(19) European Patent Office**

**Office européen des brevets**

(11) Publication number : **0 320 502 B1**

(12) **EUROPEAN PATENT SPECIFICATION**

(45) Date of publication of patent specification :
26.02.92 Bulletin 92/09

(51) Int. Cl.⁵ : **G01N 27/416**

(21) Application number : **89200122.3**

(22) Date of filing : **08.10.85**

(54) **Method of detecting oxygen partial pressure.**

(30) Priority : **08.10.84 JP 210867/84**

(43) Date of publication of application :
**14.06.89 Bulletin 89/24**

(45) Publication of the grant of the patent :
**26.02.92 Bulletin 92/09**

(84) Designated Contracting States :
**DE FR GB IT**

(56) References cited :
EP-A- 0 127 964
EP-A- 0 138 170
EP-A- 0 147 988
WO-A-85/00659
DE-A- 3 405 574
GB-A- 2 033 085
GB-A- 2 050 625
US-A- 4 272 329
US-A- 4 272 331
US-A- 4 450 065

(60) Publication number of the earlier application in
accordance with Art. 76 EPC : **0 178 149**

(73) Proprietor : **NGK INSULATORS, LTD.**
**2-56, Suda-cho, Mizuho-ku**
**Nagoya-shi, Aichi 467 (JP)**

(72) Inventor : **Mizutani, Yoshihiko**
**19, Aza-Wakata Narumi-cho**
**Midori-ku Nagoya-shi Aichi-ken (JP)**
Inventor : **Shibata, Kazuyoshi**
**15 Takeda-cho 2-chome Mizuho-ku**
**Nogoya-shi Aichi-ken (JP)**

(74) Representative : **Paget, Hugh Charles Edward**
**et al**
**MEWBURN ELLIS & CO. 2/3 Cursitor Street**
**London EC4A 1BQ (GB)**

## Description

The present invention relates to a method of determining an oxygen partial pressure of a measurement gas, and more particularly to a method suitable for reliable determination of whether a measurement exhaust gas is a rich-burned exhaust gas or a lean-burned exhaust gas, and for fast and efficient measurement of an oxygen partial pressure of the exhaust gas.

There are known various electrochemical devices, each of which comprises an electrochemical cell using a solid electrolyte body. Such electrochemical devices are used, for example, as oxygen sensors to detect the oxygen concentration of an exhaust gas (combustion exhaust gas) produced by internal combustion engines of automotive vehicles. Typical examples of such oxygen sensors include an oxygen sensor which employs a mass of oxygen-ion conductive solid electrolyte such as zirconia ceramics, to determine the oxygen concentration according to the principle of an oxygen concentration cell.

An oxygen sensor (sensor for detecting the oxygen concentration of a gas), as an example of such known type of electrochemical device, is capable of detecting an electromotive force which is induced between a measuring electrode disposed on the solid electrolyte body and exposed to the exhaust gas, and a reference electrode exposed to a reference gas, due to a difference in oxygen concentration between the exhaust gas and the reference gas. By detecting the electromotive force, the oxygen sensor determines whether the measurement gas, i.e., the exhaust gas is a rich-burned exhaust gas or a lean-burned exhaust gas. The rich-burned exhaust gas is produced in combustion of an air-fuel mixture whose air-fuel (A/F) ratio is lower than the stoichiometric air-fuel ratio at which a stoichiometric exhaust gas is produced. The lean-burned exhaust gas is emitted when the air-fuel ratio of the air-fuel mixture is higher than the stoichiometric air-fuel ratio. Thus, the engine which produces the exhaust gases is controlled on the basis of the discrimination by the oxygen sensor whether the measurement gas is a rich-burned or a lean-burned exhaust gas.

The above-indicated type of oxygen concentration sensor is adapted to sense the oxygen concentration of the exhaust gases by utilizing a variation in the electromotive force induced where the exhaust gases are produced at air-fuel ratios in the neighborhood of the stoichiometric air-fuel ratio (A/F = 14.6), namely, by utilizing the so-called "λ curve". Therefore, the application of the known oxygen concentration sensor is limited to those exhaust gases which are emitted where the air-fuel ratio of the air-fuel mixture is around the stoichiometric ratio. The above-indicated types of electrochemical sensors were originally developed and designed as oxygen sensors for sensing a measurement gas such as an exhaust gas which is produced as a result of combustion of an air-fuel mixture at the stoichiometric air-fuel ratio. Recently, however, it is proposed to use such oxygen sensors as so-called "lean A/F" sensors for sensing a lean-burned exhaust gas which is emitted in combustion of a fuel-lean air-fuel mixture, i.e., as a result of combustion with an excessive amount of air. Namely, the "lean A/F" sensor is capable of detecting the oxygen partial pressure of an oxygen-rich exhaust gas whose oxygen partial pressure is higher than that of the stoichiometric air-fuel ratio. See US-A-4224113. In recent years, however, there have been proposed oxygen concentration sensors which are provided with diffusion-resistance means in various forms such as a porous layer and a pin hole or aperture, that provides a predetermined diffusion resistance to the molecules of a component in the measurement gas. Such diffusion-resistance means are provided to widen the application range of the measurement gas.

In an oxygen concentration sensor provided with such diffusion-resistance means, a given component such as oxygen in the measurement gas is introduced into the sensor for contact with its measuring electrode, at a relatively low partial pressure of the component. Hence, this type of oxygen sensor is capable of dealing with not only a lean-burned exhaust gas whose oxygen partial pressure is higher than that of the stochiometric A/F ratio, in other words, which is produced in combustion of an air-rich or fuel-lean air-fuel mixture whose A/F ratio is far higher than 14.6, but also a rich-burned exhaust gas whose oxygen partial pressure is lower than that of the stoichiometric A/F ratio and which contains a large amount of unburned components, that is, which is produced in combustion of a fuel-rich air-fuel mixture whose A/F ratio is lower than 14.6.

As described above, the known oxygen sensor controls a partial pressure of a measurement component in the measurement gas by feeding the component to the measuring electrode through suitable diffusion-resistance means. In this known oxygen sensor, too, the determination of whether the exhaust gas is a rich-burned or lean-burned exhaust gas is accomplished by measuring an electromotive force between the measuring electrode exposed to the exhaust gas and a reference electrode exposed to a reference gas, as in the conventional oxygen sensor previously introduced, in the case where the A/F ratio of an air-fuel mixture which produces the exhaust gas is around 14.6, i.e., the stoichiometric A/F ratio.

In the case where the determination of whether the measurement exhaust gas is a rich-burned or a lean-burned exhaust gas is achieved based on a λ-curve of an electromotive force measured between the two electrodes, as indicated above, there is a time lag or delay between an actual change of the measurement gas from the rich-burned gas to the lean-burned gas or vice versa, and a corresponding variation in the measured electromotive force. Stated the other way, the electromotive force is not sufficiently responsive to a change in the measurement gas. Thus, the known oxygen sensor suffers a low response to a change of the measurement gas between the rich-burned and lean-burned exhaust gases. The time lag between the actual change in the measurement gas and the delayed variation in the electromotive force is serious particularly when the oxygen sensor has diffusion-resistance means. Described more specifically, a diffusion resistance of the diffusion-resistance means causes a delay between a variation in the oxygen partial pressure of the exhaust gas due to a change from the rich-burned to the lean-burned exhaust gas or vice versa, and a variation in the oxygen partial pressure at the measuring electrode.

Further, such an oxygen sensor adapted to detect an electromotive force induced between two electrodes suffers another problem that hydrocarbon, hydrogen, carbon monoxide, and other components in a rich-burned exhaust gas react with a metallic component of the measuring electrode, and thereby deteriorates the measuring electrode, even causing a flake-off or separation of that electrode if the deterioration is severe. Thus, the durability of the measuring electrode is reduced. This problem of reduced durability of the measuring electrode may not be considerably alleviated if the diffusion-resistance means is provided so as to cover the measuring electrode. That is, the measuring electrode is exposed to the rich-burned exhaust gas which has diffused through the diffusion-resistance means, whereby the measuring electrode is more or less influenced by the components such as hydrocarbon, hydrogen and carbon monoxide in the diffused rich-burned exhaust gas.

EP-A-138170 published 24th April 1985 shows an oxygen sensor having a sensing cell and a switch-controlled pumping cell for pumping oxygen either towards or away from one electrode of the sensing cell. When the pumping cell is switched from pumping towards the sensing cell to away from the sensing cell, or vice versa, the measuring terminals of the circuit measuring the emf of the sensing cell are reversed in polarity. No voltage is applied to the sensing cell. This switching enables choice to be made of measurement in either the lean burn or rich burn regions.

EP-A-173157 published 5th March 1986 discloses an oxygen sensor also having sensing and pumping cells. The circuit in this case applies a voltage across the pumping cell when the measured gas is in the lean burn range, but connects together the electrodes of the pumping cell when the measured gas is in the rich burn range. In the lean burn range the A/F ratio is measured, but not in the rich burn range.

It is accordingly an object of the present invention to solve the aforementioned problems encountered in the prior art. The present invention is set out in claim 1.

In the method of detecting an oxygen partial pressure according to the present invention as described above, an electric current flows relative to the electrode exposed to the measurement gas through the diffusion-resistance means, so as to keep stoichiometric an atmosphere adjacent to the above-indicated electrode, namely, so as to keep the atmosphere adjacent to this electrode substantially identical with an exhaust gas which is produced in combustion of an air-fuel mixture of the stoichiometric air/fuel ratio. To determine whether the measurement gas is a rich-burned exhaust gas or a lean-burned exhaust gas, a change in the direction of flow of the electric current or a change in the polarity of a voltage which gives the electric current, is detected. This method of detection is different from the conventional method based on a λ-curve of an electromotive force induced in a sensor. In the invention, the direction of the current flow is reversed when the normally stoichiometric atmosphere adjacent to the above-indicated electrode is changed into a rich-burned exhaust gas or a lean-burned exhaust gas. Therefore, a change or reversal of the direction of flow of the electric current, or a change in the polarity of the voltage takes place a far shorter time after the change in the measurement gas, than a change in the electromotive force beyond a given level due to the change in the measurement gas.

Since the electrode exposed to the measurement gas through the diffusion-resistance means is adapted to be held exposed to a substantially or nearly stoichiometric atmosphere, the rich-burned exhaust gas will not have an adverse effect on that electrode, as experienced in the prior art. Stated more specifically, the electrode will not suffer a problem which is conventionally caused due to a reaction of a metallic component of the electrode with unburned components in the rich-burned exhaust gas. Accordingly, the durability of the electrode is increased, and the life expectancy of the oxygen concentration sensor is improved.

In a preferred form of the invention, the oxygen concentration sensor comprises: (a) diffusion-resistance means having a predetermined diffusion resistance to the measurement gas; (b) a pumping cell which includes a first solid electrolyte member of an oxygen-ion conductive material, an outer or a first pumping electrode disposed on the first solid electrolyte member and exposed, for example, to the measurement gas, and an inner or a second pumping electrode disposed on the first solid electrolyte member and exposed, for example, to the measurement gas through the diffusion-resistance means; and (c) a sensing cell which includes a second solid electrolyte member, a reference electrode disposed on the second solid electrolyte member and exposed to a reference gas, and a measuring electrode disposed on the second solid electrolyte member and exposed to an atmosphere which is substantially the same as an atmosphere to which the inner pumping electrode is exposed. In this case, the electric current is applied between the outer and inner pumping electrodes of the pumping cell in dependance on the electromotive force induced between the reference and measuring electrodes of the sensing cell, so as to keep stoichiometric the atmosphere to which the inner pumping electrode is exposed. The determination of whether the measurement gas is the rich- or lean-burned exhaust gas is accomplished by detecting the direction of flow of the electric current between the outer and inner pumping electrodes, or the polarity of the voltage causing said current.

In this form of the invention, ambient air may be used as the reference gas to which the reference electrode of the sensing cell is exposed. In this instance, too, the electric current is applied in an appropriate direction between the outer and inner pumping electrodes of the pumping cell, so that a potential between the measuring and reference electrodes of the sensing cell is held within a range of 0.2-0.7V, preferably 0.3-0.6V, in order to maintain a substantially stoichiometric atmosphere to which the measuring electrode and the inner pumping electrode are exposed.

According to an advantageous form of the invention, the diffusion-resistance means consists of a porous ceramic layer having a predetermined diffusion resistance. When the oxygen sensor has both pumping and sensing cells, the first solid electrolyte member of the pumping cell may be formed as a porous layer which serves as the diffusion-resistance means. It is possible that the diffusion-resistance means is constituted by a pin hole or aperture or a slit which has the predetermined diffusion resistance. In this case, the appropriate electrode is exposed to the measurement gas through the aperture or slit.

Embodiments of the present invention will be described below by way of example, with reference to the accompanying drawings, in which:

Figs. 1, 2 and 4 are schematic views showing respectively three different sensors for carrying out embodiments of the invention; and

Figs. 3(a), 3(b) and 3(c) are graphs showing respectively, a change in the measurement gas, a variation in pump current of a sensor of Fig. 1, and a variation in pump voltage of the same sensor.

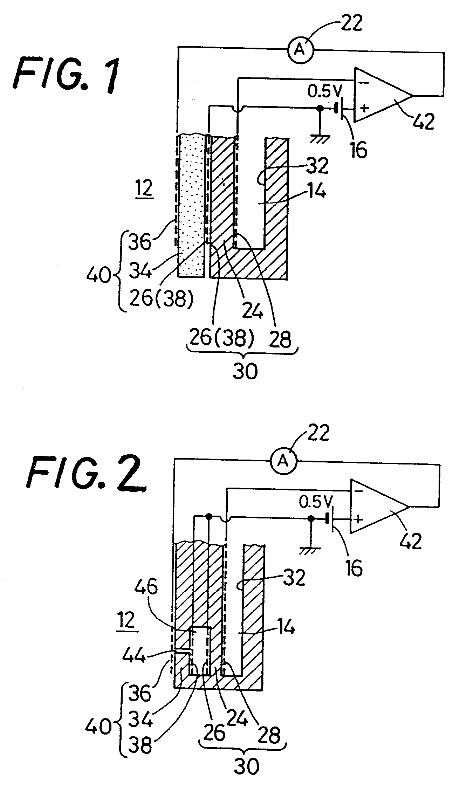

For understanding of the present invention, reference may also be made to Figs. 1 and 2 and the corresponding description of the parent application EP-A-178 149.

The oxygen concentration sensors shown in Figs. 1 and 2 have a sensing element which includes an electrochemical pumping cell capable of effecting an oxygen pumping operation, and an electrochemical sensing cell for detecting an electromotive force. In this case, as compared with the arrangement shown in Fig. 1 of parent application EP-A-178 149, it is possible to eliminate a problem of an IR drop of the sensing cell due to an influence by a pump current of the pumping cell, and thereby enhance the detecting accuracy of the sensor.

In an arrangement of Fig. 1, a sensing cell 30 is constituted by a solid electrolyte layer 24 of an oxygen-ion conductive material, and a measuring and a reference electrode 26, 28 of a porous structure which are disposed on opposite surfaces of the solid electrolyte layer 24. In this sensing cell 30, an electromotive force is induced between the measuring and reference electrodes 26, 28 according to the principle of an oxygen concentration cell. In the sensing element, an air-passage 32 is formed, so that the reference electrode 28 of the sensing cell 30 is exposed to an ambient air which is introduced into the air-passage 32 as a reference gas.

On the surface of the sensing cell 30 on which the measuring electrode 26 is disposed, there is formed a pumping cell 40 which cooperates with the sensing cell 30 to form an integral laminar structure. The pumping cell 40 includes a porous solid electrolyte layer 34 of an oxygen-ion conductive material, an outer pumping electrode 36 which is disposed on an outer exposed surface of the porous solid electrolyte layer 34, and an inner pumping electrode 38 on an inner surface of the solid electrolyte layer 34. The inner pumping electrode 38 and the measuring electrode 26 are constituted by a single common electrode. The sensing element is located so that the outer pumping electrode 36 of the pumping cell 40 is exposed to a measurement gas 12. The measurement gas 12 diffuses through the porous solid electrolyte layer 34 with a predetermined diffusion resistance, and reaches the inner pumping electrode 38. In the present embodiment, the porous solid electrolyte layer 34 itself functions as diffusion-resistance means like the porous ceramic layer 10 of Figs. 1(a) and 1(b) of parent application EP-A-178 149.

The measuring electrode 26 and the reference electrode 28 of the sensing cell 30 are connected to a power source 16, so that a predetermined reference voltage (0.5V) is applied between the measuring and reference electrodes 26, 28. The potential difference of 0.5V given by the power source 16, and an electromotive force induced in the sensing cell 30 are applied to respective inputs of a differential amplifier 42, so that the amplifier 42 provides an output of a positive or negative current proportional to a difference between the potential difference and the electromotive force, in order that an atmosphere adjacent to the measuring electrode 26 is kept stoichiometric or almost stoichiometric. This output current from the differential amplifier 42 flows between the outer and inner pumping electrodes 36, 38 of the pumping cell 40, whereby oxygen ions are moved from the outer pumping electrode 36 toward the inner pumping electrode 38, or vice versa. Thus, the pumping cell 40 performs an oxygen pumping operation. An ammeter 22 is provided to detect the direction of flow of the electric current induced by the differential amplifier 42. The single common electrode serving as the measuring electrode 26 of the sensing cell 30 and the inner pumping electrode 38 of the pumping cell 40 is grounded.

In the arrangement of the present oxygen concentration sensor using the independent sensing and pumping cells 30, 40, the electromotive force of the sensing cell 30 is detected to keep stoichiometric or almost stoichiometric the atmosphere adjacent to the measuring electrode 26 (inner pumping electrode 38), and a suitable amount of electric current is induced based on the detected electromotive force. Therefore, when the atmosphere adjacent to the measuring electrode 26 is changed due to a measurement component of the measurement gas which has diffused through the porous solid electrolyte layer 34 of the pumping cell 40, the differential amplifier 42 applies the electric current between the outer and inner pumping electrodes 36, 38 of the pumping cell 40 so as to keep stoichiometric the atmosphere adjacent to the measuring electrode 26, that is, to restore the stoichiometric atmosphere corresponding to the reference voltage of 0.5V.

When the measurement gas 12 is a rich-burned exhaust gas, a negative current is induced by the differential amplifier 42, whereby the current flows from the inner pumping electrode 38 toward the outer pumping electrode 36 and the oxygen component in the measurement gas is moved through the porous solid electrolyte layer 34 toward the inner pumping electrode 38 under an electrochemical reaction. As a result, the oxygen concentration (partial pressure) of the atmosphere adjacent to the inner pumping electrode 38, i.e., measuring electrode 26 is increased. If the measurement gas 12 is a lean-burned exhaust gas, on the other hand, the oxygen partial pressure of the atmosphere adjacent to the measuring electrode 26 is increased by the oxygen component which has diffused to the measuring electrode 26 through the porous solid electrolyte layer 34. As a result, the differential amplifier 42 provides a positive current which flows from the outer pumping electrode 36 toward the inner pumping electrode 38, whereby the oxygen in the atmosphere adjacent to the measuring electrode 26 is pumped out into the measurement gas through the porous solid electrolyte layer 34.

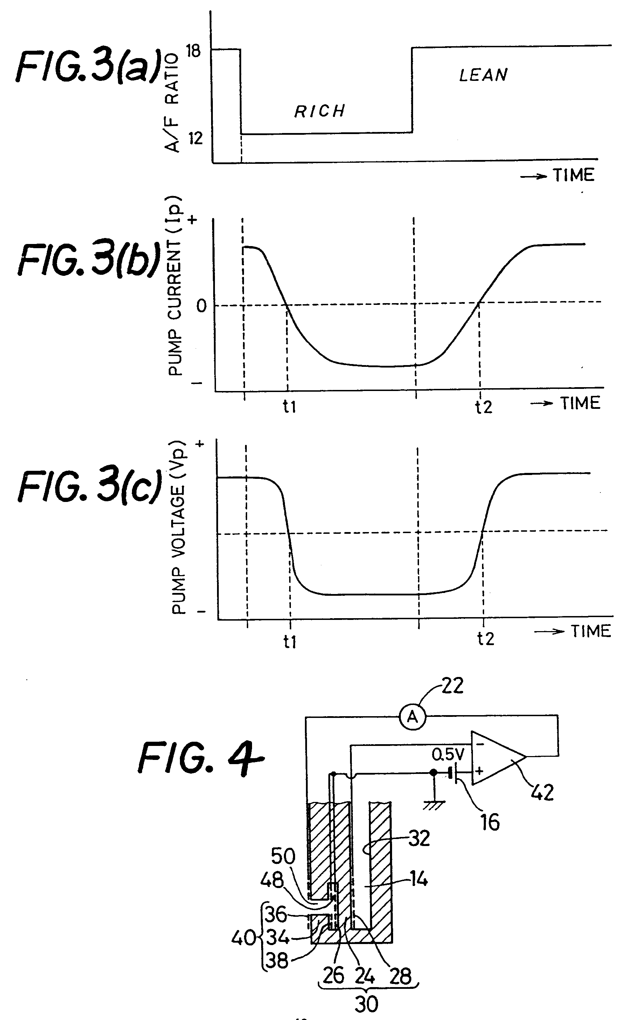

While the above method is arranged to detect change of the direction of flow of the pump current to determine whether the measurement gas is a rich-burned or a lean-burned exhaust gas, it is possible to detect a change of the pump voltage between the outer and inner pumping electrodes 36,38. Since the pump voltage Vp is varied more abruptly or suddenly than the pump current Ip as shown in Fig. 3, the determination of the measurement gas by detecting the polarity of the pump voltage Vp is desirable for improving the sensor characteristics.

A modified sensing arrangement shown in Fig. 2 is slightly different from the oxygen sensing arrangement of Fig. 1. That is, the present arrangement of Fig. 2 is characterized by the use of a pin hole or aperture 44 as diffusion-resistance means. More specifically, the sensing element of the present oxygen concentration sensor has a cavity 46 surrounded by the sensing and pumping cells 30, 40. The aperture 44 has a diameter selected to provide a predetermined diffusion resistance, and is formed through the pumping cell 40, so as to communicate the cavity 46 with the external measurement gas space. Since the aperture 44 is provided as diffusion-resistance means, the solid electrolyte layer 34 of the pumping cell 40 is formed as a gas-tight layer, contrary to the porous solid electrolyte layer of the preceding embodiments. Further, the measuring electrode 26 of the sensing cell 30 and the inner pumping electrode 38 of the pumping cell 40 are separate electrodes which are disposed on opposite sides of the cavity 46 and exposed to substantially the same atmosphere in the cavity 46.

In the oxygen concentration sensor of Fig. 2, the measurement gas 12 enters the cavity 46 through the aperture 44 with the predetermined diffusion resistance, and consequently the atmosphere in the cavity 46, that is, the atmosphere contacting the measuring electrode 26 of the sensing cell 30 is changed. As in the preceding arrangement of Fig. 1, the thus changed atmosphere is restored into a stoichiometric or substantially stoichiometric atmosphere by means of an oxygen pumping operation of the pumping cell 40. Since the operations of the sensing and pumping cells 30, 40 in the present arrangement of Fig. 2 are similar to those of the preceding arrangement of Fig. 1, repeated description thereof will be omitted in the interest of brevity.

A further modified embodiment of the invention is illustrated in Fig. 4 which is different from the embodiment of Fig. 2 , in that the diffusion-resistance means is constituted by a slit 48. Stated in greater detail, the slit 48 is a thin flat space which is disposed between and defined by the sensing and pumping cells 30, 40. The slit 48 communicates with the outside measurement gas through a gas-inlet hole 50 which provides substantially no diffusion resistance to the measurement gas. The measuring electrode 26 of the sensing cell 30 and the inner pumping electrode 38 of the pumping cell 40 are disposed so as to be exposed to the thin flat space of the slit 48. The present oxygen concentration sensor is operated in the same manner as the embodiments of Figs. 1 and 2, in order to keep stoichiometric the atmosphere in the slit 48, more precisely, the atmosphere in the inner part of the slit 48 remote from the gas-inlet hole 50. Although the measuring electrode 26 is provided over the entire area of the slit 48, it is desired that the measuring electrode 26 be provided at the inner part of the thin flat space 48 remote from the gas-inlet hole 50.

While the present invention has been described in detail in its several preferred embodiments, it is to be understood that the invention is not confined to the illustrated details, and

may be embodied with various changes, modifications and improvements.

It will be noted that the method of the present invention may be practiced on various arrangements of an oxygen concentration sensor other than those illustrated in the drawing, provided the sensing arrangements use suitable diffusion-resistance means which has a predetermined diffusion resistance to the measurement gas.

According to the various arrangements of the present invention which have been described, an electric current is caused to flow in a direction so as to keep stoichiometric the atmosphere adjacent to an electrode exposed to the measurement gas which has diffused through suitable diffusion-resistance means. The direction of flow of the electric current is changed when the measurement gas is changed from a rich-burned exhaust gas to a lean-burned exhaust gas or vice versa. Therefore, the measurement gas may be sensed by detecting a change of the direction of flow of the electric current. This detecting method permits a significantly improved response of the sensor, as compared with the conventional method in which the measurement gas is detected based on an electromotive force induced between the electrodes. The present method of the invention is suitable for checking combustion exhaust gases produced by internal combustion engines, and is effective in protecting the electrode against deterioration and improving the service life of the sensor. These are industrially significant advantages of the present invention.

## Claims

1. A method of effecting determination whether a measurement gas is a rich-burned exhaust gas or a lean-burned exhaust gas, using an oxygen concentration sensor which includes a solid electrolyte member (34) of an oxygen-ion conductive material, and at least two electrodes for said member including a first (36) and second (38) electrode, said second electrode (38) being exposed to the measurement gas through diffusion resistance means (34, 44, 48), comprising the steps of:

sensing an induced electromotive force dependent on the oxygen concentration of the measurement gas and applying an electrical potential dependent on said induced electromotive force between the first and second electrodes (36, 38) in a manner such that (a) an electric current flows in said electrolyte member (34) in one or the opposite direction and (b) the polarity of said electrical potential reverses, depending upon whether the measurement gas is said rich-burned exhaust gas or said lean-burned exhaust gas, the current which flows tending to keep stoichiometric the atmosphere adjacent to said second electrode (38), and

detecting the direction of flow of said electric current in said electrolyte member (34) or the polarity of said electrical potential which causes the electric current, thereby effecting said determination.

2. A method according to claim 1 wherein said oxygen concentration sensor comprises said electrolyte member (34) which also constitutes said diffusion-resistance means (34) having a predetermined diffusion resistance to the measurement gas;

a pumping cell (40) which comprises said first solid electrolyte member (34), said first electrode (36) disposed on said first solid electrolyte member (34) and directly exposed to the measurement gas and said second electrode (38) disposed on said solid electrolyte member (34) and exposed to the measurement gas through said solid electrolyte member (34);

a sensing cell (30) which includes a second solid electrolyte member (24), a reference electrode (28) disposed on said second electrolyte member (24) and exposed to a reference gas and a measurement electrode (26) disposed on said second solid electrolyte member (24) and exposed to an atmosphere which is substantially the same as an atmosphere to which said second electrode (38) is exposed,

said induced electromotive force being induced between said reference and measuring electrodes (28, 26) of the sensing cell (30).

3. A method according to claim 2, wherein a single common electrode (26, 38) serves as said second electrode of the pumping cell and said measuring electrode of the sensing cell.

4. A method according to claim 1, wherein said oxygen concentration sensor has an aperture (44) or a slit (48), the aperture or slit constituting said diffusion-resistance means having a predetermined diffusion resistance to the measurement gas;

a pumping cell (40) which comprises said first solid electrolyte member (34), said first electrode (36) disposed on said first solid electrolyte member (34) and directly exposed to the measurement gas and said second electrode (38) disposed on said solid electrolyte member (34) and exposed to the measurement gas through said diffusion resistance means (50, 44),

a sensing cell (30) which includes a second solid electrolyte member (24), a reference electrode (28) disposed on said second electrolyte member (24) and exposed to a reference gas and a measurement electrode (26) disposed on said second solid electrolyte member (24) and exposed to an atmosphere which is substantially the same as an atmosphere to which said second solid electrode (38) is exposed,

said induced electromotive force being induced between said reference and measuring electrodes (28, 26) of the sensing cell.

5. A method according to any one of claims 2 to 4 wherein said reference gas is ambient air and the potential difference between said measuring (26) and reference (28) electrodes of the sensing cell is held within the range of 0.2-0.7V.

6. A method according to claim 5 wherein said potential difference between said measuring (26) and reference (28) electrodes of the sensing cell is held within the range of 0.3-0.6V.

## Patentansprüche

1. Verfahren zur Durchführung einer Bestimmung, ob ein Meßgas ein fettverbranntes Abgas oder ein magerverbranntes Abgas ist, unter Verwendung eines Sauerstoffkonzentrationsfühlers, der einen Festelektrolytkörper (34) aus einem Sauerstoffionen-Leitmaterial und mindestens zwei eine erste (36) und eine zweite (38) Elektrode aufweisende Elektroden für den Körper aufweist, wobei die zweite Elektrode (38) dem Meßgas durch eine Diffusionswiderstandseinrichtung (34,44,48) ausgesetzt ist, mit den Schritten des

Abfühlens einer induzierten elektromotorischen Kraft in Abhängigkeit von der Sauerstoffkonzentration des Meßgases und des Anlegens eines elektrischen Potentials in Abhängigkeit von der induzierten elektromotorischen Kraft zwischen der ersten und der zweiten Elektrode (36,38) in einer solchen Weise, daß (a) ein elektrischer Strom in dem Elektrolytkörper (34) in der einen oder der entgegengesetzten Richtung fließt und (b) die Polarität des elektrischen Potentials sich in Abhängigkeit davon umkehrt, ob das Meßgas das fettverbrannte Abgas oder das magerverbrannte Abgas ist, wobei der fließende Strom bestrebt ist, die an die zweite Elektrode (38) angrenzende Atmosphäre stöchiometrisch zu halten, und

Erfassens der Flußrichtung des elektrischen Stroms in dem Elektrolytkörper (34) oder der Polarität des den elektrischen Strom hervorrufenden elektrischen Potentials, wodurch die Bestimmung bewirkt wird.

2. Verfahren nach Anspruch 1, bei dem der Sauerstoffkonzentrationsfühler den Elektrolytkörper (34) aufweist, der auch die einen vorbestimmten Diffusionswiderstand für das Meßgas aufweisende Diffusionswiderstandseinrichtung (34) bildet,

eine den ersten Festelektrolytkörper (34) aufweisende Pumpzelle (40), wobei die erste Elektrode (36) auf dem ersten Festelektrolytkörper (34) angeordnet und dem Meßgas unmittelbar ausgesetzt ist und die zweite Elektrode (38) auf dem Festelektrolytkörper (34) angeordnet und dem Meßgas durch den Festelektrolytkörper (34) hindurch ausgesetzt ist,

eine einen zweiten Festelektrolytkörper (24) aufweisende Fühlzelle (30), wobei eine Bezugselektrode (28) auf dem zweiten Elektrolytkörper (24) angeordnet und einem Bezugsgas ausgesetzt ist und eine Meßelektrode (26) auf dem zweiten Festelektrolytkörper (24) angeordnet und einer Atmosphäre ausgesetzt ist, die im wesentlichen dieselbe ist wie eine Atmosphäre, der die zweite Elektrode (38) ausgesetzt ist,

wobei die induzierte elektromotorische Kraft zwischen der Bezugs- und der Meßelektrode (28,26) der Fühlzelle (30) induziert wird.

3. Verfahren nach Anspruch 2, bei dem eine einzige gemeinsame Elektrode (26,38) als die zweite Elektrode der Pumpzelle und die Meßelektrode der Fühlzelle dient.

4. Verfahren nach Anspruch 1, bei dem der Sauerstoffkonzentrationsfühler eine Öffnung (44) oder einen Schlitz (48) aufweist, wobei die Öffnung oder der Schlitz die einen vorbestimmten Diffusionswiderstand für das Meßgas aufweisende Diffusionswiderstandseinrichtung bilden,

eine den ersten Festelektrolytkörper (34) aufweisende Pumpzelle (40), wobei die erste Elektrode (36) auf dem ersten Festelektrolytkörper (34) angeordnet und dem Meßgas unmittelbar ausgesetzt ist und die zweite Elektrode (38) auf dem Festelektrolytkörper (34) angeordnet und dem Meßgas durch die Diffusionswiderstandseinrichtung (50,44) hindurch ausgesetzt ist,

eine einen zweiten Festelektrolytkörper (24) aufweisende Fühlzelle (30), wobei eine Bezugselektrode (28) auf dem zweiten Elektrolytkörper (24) angeordnet und einem Bezugsgas ausgesetzt ist und eine Meßelektrode (26) auf dem zweiten Festelektrolytkörper (24) angeordnet und einer Atmosphäre ausgesetzt ist, die im wesentlichen dieselbe ist wie eine Atmosphäre, der die zweite Festelektrode (38) ausgesetzt ist,

wobei die induzierte elektromotorische Kraft zwischen der Bezugs- und der Meßelektrode (28,26) der Fühlzelle induziert wird.

5. Verfahren nach einem der Ansprüche 2 bis 4, bei dem das Bezugsgas die Umgebungsluft ist und die Potentialdifferenz zwischen der Meß- (26) und der Bezugs- (28) Elektrode der Fühlzelle in dem Bereich von 0,2 bis 0,7 V gehalten wird.

6. Verfahren nach Anspruch 5, bei dem die Potentialdifferenz zwischen der Meß- (26) und der Bezugs- (28) Elektrode der Fühlzelle in dem Bereich von 0,3 bis 0,6 V gehalten wird.

## Revendications

1. Procédé pour effectuer une détermination pour savoir si un gaz de mesure est un gaz d'échappement à combustion riche ou un gaz d'échappement à combustion pauvre, utilisant un détecteur de concentration d'oxygène qui comprend un organe électrolyte solide (34) en matériau conducteur d'ions oxygène, et au moins deux électrodes pour ledit élément qui comprennent une première (36) et une seconde (38) électrodes, cette seconde électrode (38) étant exposée au gaz de mesure au travers de moyens de résistance à la diffusion (34, 44, 48), comprenant les étapes consistant à :

détecter une force électromotrice induite en fonction de la concentration d'oxygène dans le gaz de mesure et appliquer un potentiel électrique dépendant de la force électromotrice induite entre les première et seconde électrodes (36, 38) de sorte que (a) un courant électrique circule dans l'élément électrolyte (34) suivant une direction ou la direction opposée, et (b) la polarité du potentiel électrique s'inverse en fonction de ce que le gaz de mesure est un gaz d'échappement à combustion riche ou un gaz d'échappement à combustion pauvre, le courant qui circule ayant tendance à maintenir l'atmosphère adjacente à la seconde électrode (38) stoechiométrique, et

détecter le sens de circulation du courant électrique dans l'élément électrolyte (34) ou la polarité dudit potentiel électrique qui provoque le courant électrique, afin d'effectuer la dite détermination.

2. Procédé selon la revendication 1, dans lequel le détecteur de concentration d'oxygène comprend l'élément électrolyte (34) qui constitue également lesdits moyens de résistance à la diffusion (34) avec une résistance à la diffusion prédéterminée du gaz de mesure;

une cellule de pompage (40) qui comporte le premier élément électrolyte solide (34), la première électrode (36) étant disposée sur le premier élément électrolyte solide (34) et directement exposée au gaz de mesure, et la seconde électrode (38) étant disposée sur l'élément électrolyte solide (34) et exposée au gaz de mesure au travers de l'élément électrolyte solide (34);

une cellule de détection (30) qui comprend un second élément électrolyte solide (24), une électrode de référence (26) disposée sur le second élément électrolyte (24) et exposée à un gaz de référence, ainsi qu'une électrode de mesure (26) disposée sur le second élément électrolyte solide (24) et exposée à une atmosphère qui est substantiellement identique à l'atmosphère à laquelle la seconde électrode (38) est exposée,

ladite force électromotrice induite étant induite entre les électrodes de référence et de mesure (28, 26) de la cellule de détection (30).

3. Procédé selon la revendication 2, dans lequel une électrode unique commune (26, 38) sert de seconde électrode de la cellule de pompage et d'électrode de mesure de la cellule de détection.

4. Procédé selon la revendication 1, dans lequel le détecteur à concentration d'oxygène possède une ouverture (44) ou une fente (48), l'ouverture ou fente faisant office de moyens de résistance à la diffusion qui possèdent une résistance prédéterminée à la diffusion du gaz de mesure;

une cellule de pompage (40) qui comprend le premier élément électrolyte solide (34), ladite première électrode (36) étant disposée sur le premier élément électrolyte solide (34) et étant directement exposée au gaz de mesure et la seconde électrode (38) étant disposée sur ledit élément électrolyte solide (34) et exposée au gaz de mesure au travers des moyens de résistance à la diffusion (50, 44),

une cellule de détection (30) qui comprend un second élément d'électrolyte solide (24), une électrode de référence (28) étant disposée sur le second élément électrolyte solide (24) et exposée à un gaz de référence et une électrode de mesure (26) étant disposée sur le second élément électrolyte solide (24) et exposée à une atmosphère qui est substantiellement identique à l'atmosphère à laquelle la seconde électrode solide (38) est exposée,

ladite force électromotrice induite étant induite entre lesdites électrodes de référence et de mesure (28, 26) de la cellule de détection.

5. Procédé selon l'une des revendications 2 à 4, dans lequel ledit gaz de référence est de l'air ambiant et la différence de potentiel entre lesdites électrodes de mesure (26) et de référence (28) de la cellule de détection est maintenue à l'intérieur d'une gamme entre 0,2-0,7V.

6. Procédé selon la revendication 5, dans lequel la différence de potentiel entre lesdites électrodes de mesure (26) et de référence (28) de la cellule de détection est maintenue dans une gamme comprise entre 0,3-0,6V.

*FIG. 1*

*FIG. 2*

9

FIG.3(a)

FIG.3(b)

FIG.3(c)

FIG. 4